# EUROPÄISCHE PATENTSCHRIFT

(11) **EP 1 506 108 B1**
(45) Veröffentlichungstag und Bekanntmachung des Hinweises auf die Patenterteilung: **23.11.2005**
(21) Anmeldenummer: 03732405.0
(22) Anmeldetag: 19.05.2003
(51) Int. Cl.: B60S 1/08

(54) **REGENSENSOR**
RAIN SENSOR
DETECTEUR DE PLUIE

(30) Priorität: 18.05.2002 DE 10222321
(43) Veröffentlichungstag der Anmeldung: 16.02.2005
(73) Patentinhaber: ELMOS Semiconductor AG, 44227 Dortmund (DE)
(72) Erfinder: REIME, Gerd, 75328 Schönberg (DE)
(74) Vertreter: Hilleringmann, Jochen
(86) Internationale Anmeldenummer: PCT/EP2003/005221
(87) Internationale Veröffentlichungsnummer: WO 2003/097420

(56) Entgegenhaltungen:
- WO-A-00/53466
- WO-A-02/083468
- DE-A- 19 704 818
- DE-A- 19 950 060

## Beschreibung

Die Erfindung betrifft einen optischen Sensor zur Detektion von Verunreinigungen/Feuchtigkeit auf einer Scheibe, insbesondere Windschutzscheibe eines Kraftfahrzeuges.

Eine Sensor nach dem Oberbegriff des Anspruchs 1 ist aus der DE 19 704 818 bekannt. Zur Steuerung des Scheibenwischers in Abhängigkeit der Benetzung einer Kfz-Frontscheibe sind Sensoren verschiedenster Ausführungen bekannt.

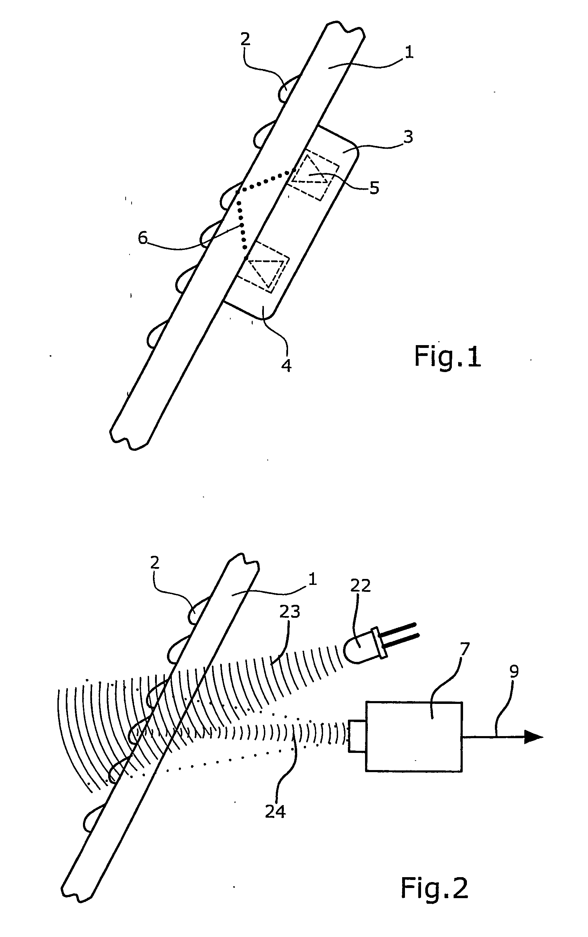

In einigen Fällen ist zur Detektion der Benetzung ein direkter Kontakt des Sensors mit der Feuchtigkeit notwendig, z.B. bei resistiven oder thermischen Sensoren. Sensoren ohne direkten Kontakt zur Feuchtigkeit sind meist direkt auf der inneren Scheibenoberfläche befestigt und nutzen die Veränderung des Brechungsindex an der benetzten Scheibenoberfläche (Fig. 1).

Dabei wird ein Lichtstrahl 6, vorzugsweise im Infrarotbereich, unter einem bestimmten Winkel von einem Sendeelement 4 so in die Fahrzeugscheibe 1 eingekoppelt, dass dieser an der Oberfläche möglichst vollständig zurückgeworfen wird und so von einer Photodiode 4 empfangen werden kann. Bei Benetzung der Oberfläche mit Wassertropfen werden die Brechungsbedingungen an der Oberfläche gestört, so dass der an der Photodiode 4 gemessene Lichtanteil abhängig von der Benetzung variiert.

Die Veränderung der Amplitude des empfangenen Lichtes wird zur entsprechenden Steuerung des Scheibenwischers ausgewertet.

Ein solches System mit dem Vorteil der vollständigen Unempfindlichkeit gegenüber Fremdlicht ist aus WO-A-95/01561 bekannt.

Im Gegensatz zu resistiven, thermischen oder auch kapazitiven Systemen konnten sich optische Regensensoren der vorstehend genannten Art im Markt mit Vorteil durchsetzen. Eine gewisse Einschränkung bezüglich des Einbauortes liegt in der Notwendigkeit des direkten optischen Kontaktes zur inneren Scheibenoberfläche bzw. von besonderen Maßnahmen zur Ein- und Auskoppelung des Lichtstrahles begründet.

Der Einsatz einer Videokamera zur Detektion einer Benetzung oder Verschmutzung auf der Außenseite der Scheibe ist aus DE-C-198 03, 674 DE-A-197 49 331, DE-A-197 04 818, US-A-6,097,024 und US-A-4,867,561, bekannt. Allerdings dienen diese Kameras dieser Systeme ausschließlich der Regentropfendetektion.

Eine Aufgabe der Erfindung ist es, die Benetzung einer Scheibenoberfläche aus einiger Entfernung mit Hilfe einer Kamera detektieren zu können, deren Fokus von der Kamera aus betrachtet weit hinter der Scheibenoberfläche liegt. Insbesondere soll es mit der Erfindung möglich sein, zur Detektion von Beschlag und/oder Regen auf einer Windschutzscheibe eine Kamera zu verwenden, die zur Erfassung des in Fahrrichtung vor dem Fahrzeug befindlichen Bereichs vorgesehen ist.

Zur Lösung dieser Aufgabe wird mit der Erfindung eine Vorrichtung zur Detektion der Benetzung und/oder Verschmutzung einer Scheibenoberfläche (Innen- und/oder Außenseite) insbesondere eines Fahrzeuges vorgeschlagen, wobei die Vorrichtung versehen ist mit
- einer Kamera mit einem Sensor, der eine Vielzahl von in Array-Form angeordneten einem Belichtungszyklus entsprechend belichtbaren, lichtempfindlichen Pixel aufweist, und mit einer Fokussieroptik für einen auf nahezu unendlich eingestellten Fokus der Kamera und
- einer Lichtquelle zur Beleuchtung eines von der Kamera erfassbaren Erfassungsbereichs der Scheibenoberfläche,
- wobei
- die Lichtquelle in einem vorgebbaren EIN/AUS-Zyklus ein- und ausschaltbar ist,
- der EIN/AUS-Zyklus mit dem Belichtungszyklus des Sensors der Kamera synchronisiert ist und
- eine Benetzung/Verschmutzung der Scheibenoberfläche durch Vergleich der Bildinformation des Sensors der Kamera bei aus- und bei eingeschalteter Lichtquelle detektierbar ist.

In den Unteransprüchen sind verschiedene Ausgestaltungen der Erfindung angegeben.

Nach der Erfindung wird zur Detektion von Beschlag bzw. Benetzung und Verschmutzung einer Windschutzscheibe eines Fahrzeuges eine Videokamera verwendet.

Videokameras in Fahrzeugen sind grundsätzlich bekannt und werden beispielsweise zwecks Erfassung des Bereichs vor dem Fahrzeug eingesetzt. Hierdurch lassen sich die Fahrzeuge automatisch steuern. Grundlage der Erfindung ist es, für den Fall, dass ein Kfz mit einer derartigen Videokamera ausgestattet ist, diese Videokamera zusätzlich auch zur Detektion von Beschlag bzw. Benetzung und Verschmutzung der Windschutzscheibe einsetzen zu können. Eine solche Kamera erfasst einen Bereich zwischen z. B. 10 m bis 50 m vor dem Fahrzeug. Mit anderen Worten ist ihr Fokus auf quasi unendlich eingestellt. Dabei "blickt" die Kamera durch einen von den Scheibenwischern erfassten relativ kleinen Bereich der Windschutzscheibe auf die Fahrbahn sowie beidseitig und oberhalb derselben. Ein Regentropfen wird ohne Zusatzmaßnahmen von der Kamera bei dieser Fokuseinstellung (quasi unendlich) nur unscharf erkannt, was insofern von Vorteil ist, als anderenfalls die für die (halbautomatische) Fahrzeugsteuerung wichtige Bildinformation verfälscht wäre bzw. nicht erfasst werden könnte.

Erfindungsgemäß wird eine Benetzung/Verunreinigung auf der Windschutzscheibe durch getaktetes Belichten derselben mittels Licht für die Kamera "sichtbar" gemacht, wobei die Taktung der Lichtquelle für diese Belichtung mit der Belichtungsfrequenz der Kamera synchronisiert ist. Die Belichtung der Kamera erfolgt typenabhängig entweder pixel-, zeilen-, oder bildweise. Wird nun die Lichtquelle z. B. mit der halben Belichtungsfrequenz eingeschaltet, so weisen bzw. weist jedes zweite Pixel, jede zweite Zeile bzw. jedes zweite Bild dann, wenn im Erfassungsbereich des betreffenden Pixels, der betreffenden Zeile bzw. des Bildes eine Benetzung der Scheibe zu verzeichnen ist, neben der Bildinformation (Helligkeitswert) eine zusätzliche Helligkeitsinformation auf. Durch Vergleich der Helligkeitswerte benachbarter Pixel, Zeilen oder aufeinanderfolgender Bilder oder, allgemeiner ausgedrückt, durch Vergleich der Helligkeitswerte von Pixeln, Zeilen bzw. Bilder, die reine Bildinformation aufweisen, mit solchen, die durch zusätzliche Belichtung mittels der Lichtquelle auch Benetzungsinformationen (zusätzliche Helligkeitswerte) aufweisen, kann dann ermittelt werden, ob Benetzung gegeben ist oder nicht. Dabei wird davon ausgegangen, dass sich die Bildinformation trotz ihrer zeitlich aufeinanderfolgenden Erfassung durch die Pixel der Kamera nicht wesentlich ändert. Diese Annahme gilt dann, wenn die Belichtungsfrequenz (Bildfolgefrequenz) der Kamera vergleichsweise hoch ist. Dies ist z. B. bereits ab 50 Bildern pro Sekunde gegeben.

In vorteilhafter Weiterbildung der Erfindung wird für die getaktete zusätzliche Belichtung der Kamera (die Belichtung über das Umgebungslicht ist stets gegeben) Licht im nicht sichtbaren Wellenlängenbereich verwendet. Der Vorteil dieser Maßnahme besteht darin, dass die Insassen durch das getaktete Licht nicht gestört werden und dass die allgemein verwendeten Digitalkameras in diesem Wellenlängenbereich grundsätzlich auch empfindlich sind. Herkömmlich wird der nicht sichtbare Wellenlängenbereich bei derartigen Kameras herausgefiltert, da die Kamera in ihrer Anwendung beispielsweise für die Erfassung der Fahrbahn auch nur das "sehen" soll, was auch das menschliche Auge sieht. Dieselbe Situation gilt in dem Fall, wenn eine Digitalkamera in beispielsweise einem Fotoapparat verwendet wird.

Zweckmäßigerweise wird die zusätzliche getaktete Lichtquelle sinusförmig angesteuert. Dies ist unter dem Aspekt von elektromagnetischer Verträglichkeit von Vorteil.

In weiterer vorteilhafter Ausgestaltung der Erfindung ist vorgesehen, dass eine Benetzung der Scheibenoberfläche durch Ausfiltern und Auswerten der EIN/AUS-Zyklusfrequenz, mit der die Lichtquelle ansteuerbar ist, unter Zuhilfenahme eines Synchrondemodulators und/oder einer Filteranordnung detektierbar ist.

Vorteilhafterweise ist aus dem Ausgangssignal des Sensors der Kamera ein Bildhelligkeitssignal gewinnbar, und zwar durch Filtern der EIN/AUS-Zyklusfrequenz aus diesem Bildhelligkeitssignal.

Im Falle einer Taktung der Lichtquelle entsprechend der Pixelabfragefrequenz des Sensors der Kamera ist es von Vorteil, wenn der EIN/AUS-Zyklus der Lichtquelle von Zeile zu Zeile um 180° phasenverschoben wird. Innerhalb des zweidimensionalen Pixelfeldes der Kamera wäre dann also jedes zweite Pixel mit dem Licht der zusätzlichen Lichtquelle belichtet, wobei die so zusätzlich belichteten Pixel von Zeile zu Zeile auf Lücke zueinander liegen.

Im Falle einer Taktung der Lichtquelle entsprechend der Zeilenabfragefrequenz bzw. der Bildabfragefrequenz ist die zuvor beschriebene Phasenverschiebung grundsätzlich nicht erforderlich.

Vorzugsweise ist ferner vorgesehen dass zur Gewinnung eines eine Benetzung anzeigenden Signals aus dem Signal des Sensors der Kamera die Signale der Pixel zweier aufeinanderfolgender Zeilen des Sensors subtrahiert werden. Hierbei ist es ferner zweckmäßig, wenn das Benetzungssignal einer Filterung und/oder Synchrondemodulation unterzogen wird.

Zur Gewinnung eines Bildsignals mit überlagerter Benetzungsinformation (Gleichlichtanteil) werden vorzugsweise die Signale zweier aufeinanderfolgender Zeilen des Sensors addiert.

Zur Gewinnung eines Bildsignals ohne Benetzungsinformation wird die Lichtquelle zwischen zwei hintereinanderliegenden Zeilen des Sensors der Kamera schalttaktsynchron umgeschaltet.

Vorzugsweise ist ferner vorgesehen, dass innerhalb eines Zeitabschnitts des Ausgangssignals des Sensors der Kamera eine Mittelwertbildung ohne Lichtquellenzuschaltung erfolgt, dass für einen anderen Zeitabschnitt des Ausgangssignals des Sensors der Kamera eine Mittelwertbildung mit Lichtquellenzuschaltung erfolgt und dass zur Gewinnung eines Benetzungssignals bzw. Benetzungswertes beide Mittelwerte verglichen werden. Diese Vorgehensweise gilt insbesondere dann, wenn die Auswertung, ob nun Benetzung/Beschlag/Verunreinigung vorliegt, anhand eines kompletten Kamerabildes durchgeführt wird. Sollte sich der Mittelwert eines Kamerabildes bei Belichtung ausschließlich durch das Umgebungslicht von dem Mittelwert eines darauffolgenden Kamerabildes mit zusätzlicher Belichtung durch die Lichtquelle weniger als ein vorgebbarer Schwellwert unterscheiden, so liegt keine Verunreinigung bzw. kein Beschlag/keine Benetzung vor. Bleibt der Mittelwertunterschied über mehrere Bildsequenzen gleich, so liegt eine gleichbleibende Benetzung/Betauung vor. Dies deutet darauf hin, dass die Windschutzscheibe durch beispielsweise den Aufprall eines Insekts verschmutzt ist. Variiert schließlich die Mittelwertdifferenz über mehrere Bildsequenzen, so liegt eine veränderliche Verschmutzung der Scheibe vor, was auf Regen oder Beschlag hindeutet.

Bei der zuvor genannten Vorgehensweise wird ein wechselseitiger Vergleich zwischen dem Mittelwert der Zeitabschnitte ohne Lichtquellenzuschaltung und dem Mittelwert der Zeitabschnitte mit Lichtquellenzuschaltung mittels Filterung des Differenzwertes und/oder Synchrondemodulation zwecks Detektion der Benetzung durchgeführt.

Bezüglich der Einkopplung des zusätzlichen Lichts in die Scheibe ist es von Vorteil, wenn dieses Licht direkt in die Scheibe eingekoppelt ist, wobei an der der Einkopplung gegenüberliegenden Seite bei Benetzung eine Reflektion zur Kamera hin erfolgt. Die Einkopplung des Lichts erfolgt zweckmäßigerweise seitlich in die Scheibe oder über ein Prisma in die Oberfläche der Scheibe.

Vorzugsweise trifft die elektromagnetische Strahlung der Lichtquelle mit totaler Reflexion auf diejenige Oberfläche, der Scheibe auf, auf der eine Benetzung zu detektieren ist.

Das erfindungsgemäße Konzept kann zur Detektion sowohl einer Außenbenetzung (Regen) auf der Scheibe als auch zur Detektion eines Innenbeschlages der Scheibe verwendet werden. Um beides voneinander unterscheidbar machen zu können, ist es vorteilhaft, eine zweite Lichtquelle einzusetzen, deren Licht unter Totalreflexion zur Beschlagsdetektion an der Scheibeninnenseite auf diese auftrifft. Diese beiden Lichtquellen sind zur getrennten Detektion von Benetzung auf der Außenseite der Scheibe und Beschlag auf der Innenseite der Scheibe getrennt ansteuerbar. Alternativ können die beiden Lichtquellen mit verschiedenen Taktfrequenzen gleichzeitig angesteuert werden.

Zur Detektion einer äußeren Benetzung wird der Helligkeitswert, der durch die Belichtung der zweiten Lichtquelle und durch Reflektion an der Innenseite der Scheibe in Richtung auf die Kamera (im Fall von Betauung möglich) gewonnen wird, vom Helligkeitswert bei Belichtung der Windschutzscheibe mit der ersten Lichtquelle, welche Reflektionen an der Innen- und an der Außenseite der Scheibe verursacht, subtrahiert, um eine Aussage über äußere Benetzung (Regen) zu erzielen.

Mit Vorteil ist ferner vorgesehen, dass das Licht der ersten Lichtquelle unter Totalreflexion auf die Innenseite der Scheibe zur Innenbeschlagsdetektion und das Licht der zweiten Lichtquelle unter Totalreflexion auf die äußere Seite der Scheibe zur Detektion einer äußeren Benetzung derselben fällt.

Schließlich sei noch angemerkt, dass es vorteilhaft sein kann, wenn die Fokussieroptik der Kamera zwischen nahezu unendlich und der Scheibenoberfläche verstellbar ist.

Weiterhin besteht eine Alternative dahingehend, einen Detektor zur Detektion von Kontrastsprüngen im Signal des Sensors zur Erfassung der Benetzung/Verschmutzung auf der Scheibenoberfläche zu verwenden.

Die Erfindung sowie ihre vorteilhaften Ausgestaltungen werden nachfolgend unter Bezugnahme auf die Zeichnung näher erläutert. Im einzelnen zeigen:
- Fig. 1: schematisch den Aufbau eines bekannten Regensensors sowie dessen Anordnung relativ zu einer Windschutzscheibe,
- Fig. 2: schematisch den Aufbau eines erfindungsgemäßen Regensensors zur berührungslosen Detektion von Innen- und Außenbenetzung sowie Verschmutzung einer Windschutzscheibe,
- Fig. 3: eine Gegenüberstellung der Empfindlichkeiten des menschlichen Auges über die Wellenlänge elektromagnetischer Strahlung,
- Fig. 4: eine schematische Darstellung zur Verdeutlichung der Einkopplung des gepulsten Lichts bei Benetzung der Scheibe in die Kamera,
- Fig. 5: Zeitdiagramme für die Helligkeitswerte exemplarischer aufeinander folgender Pixel der Kamera und der Ein-/Ausschaltung der Lichtquelle,
- Fig. 6: eine erste Ausgestaltung einer Schaltung des erfindungsgemäßen Regensensors,
- Fig. 7: eine graphische Darstellung der normalen Hintergrundinformation eines Pixels gegenüber der zusätzlichen Information durch die getaktete Belichtung,
- Fig. 8: ein zweites Ausführungsbeispiel einer Beschaltung des Regensensors,
- Fig. 9: ein Beispiel für den Signalverlauf für aufeinanderfolgende Pixel einer Kamera bei Belichtung durch lediglich Umgebungslicht,
- Fig. 10: das Signal gemäß Fig. 9 mit zusätzlicher getakteter Belichtung zur Benetzungsdetektion,
- Fig. 11: einen Signalverlauf ähnlich dem gemäß Fig. 10, jedoch für eine benachbarte Zeile und bei um 180° versetzter Taktung der zusätzlichen Lichtquelle,
- Fig. 12: das Differenzsignal der Fign. 10 und 11 zur Verdeutlichung einer Benetzung der Scheibe,
- Fig. 13: ein weiteres Ausführungsbeispiel einer Beschaltung des erfindungsgemäßen Regensensors,
- Fig. 14: ein Ausführungsbeispiel für die Einkopplung des getakteten Lichts in die Scheibe über ein Prisma,
- Fig. 15: eine Alternative zur Einkopplung des Lichts der getakteten Lichtquelle direkt seitlich in die Scheibe über deren Kante,
- Fig. 16: ein Beispiel für eine Anordnung einer weiteren Lichtquelle zur Detektion von Innenbeschlag,
- Fig. 17: eine schematische Darstellung der Funktionsweise der Belichtung der Innenseite der Scheibe zur Detektion von Innenbeschlag und
- Fig. 18: ein letztes Ausführungsbeispiel zur Verdeutlichung der möglichen Anordnung zweier Lichtquellen zu beiden Seiten einer Scheibe zwecks getrennter Erfassung von Außen- und Innenbenetzung.

Gemäß Fig. 2 ist eine Kamera 7 (z. B. monochromatische CCD- oder CMOS-Kamera) so im Innenraum des Fahrzeuges angeordnet, dass sie einen im Bereich des durch den Scheibenwischer überstrichenen Bereiches befindlichen Teil der Windschutzscheibe 1 erfasst.

Die eigentliche Aufgabe der Kamera 7 ist die Überwachung der Straße in größerer Entfernung vom Fahrzeug zur Fahrbahn-, Abstands- oder Tunneldetektion. Die Kamera 7 ist in der Regel so angeordnet, dass sie vom Fahrzeuginneren durch die Windschutzscheibe 1 hindurch nach vorne blicken, wobei die Kamerasichtlinie vorzugsweise mit der des Fahrers übereinstimmt.

Mit einer entsprechenden Auswertung der abgetasteten Helligkeits-Signale des aufgenommen Bildes kann dann z.B. die Position des Fahrzeuges mittig zur Mittellinie und Seitenstreifen einer Straße berechnet, bzw. nachgesteuert werden.

Dazu ist es notwendig, den Fokuspunkt, also den Bereich der optimalen Bildschärfe, außerhalb der Fahrzeugscheibe zu legen, um die zur Berechnung wichtigen Bildelemente kontrastreich und mit hoher Kantenschärfe zu erfassen. Dies kann z.B. der Bereich 10 - 50 m vor dem Fahrzeug sein. Dies bedingt eine Fokussierung der Kamera 7 auf nahezu unendlich, so dass die Scheibenoberfläche bzw. deren Benetzung im Bild unscharf erscheint. Aufgabe der hier weiter beschriebenen Anordnung ist nun eine Detektion eines Tropfenbelages nahe dem Kameraobjektiv bei gleichzeitiger Fokussierung der Bildschärfe auf nahezu unendlich.

Veränderungen direkt auf der Scheibenoberfläche, z.B. durch Benetzung, werden dann jedoch nicht mehr scharf abgebildet. Dies bietet den Vorteil, dass eine Benetzung der Oberfläche die Abbildung z.B. in 30 m Entfernung bis zu einem gewissen Grad nicht stört. Die "unscharfe" Abbildung der Regentropfen verteilt sich auf größere Bildbereiche, so dass eine kontrastreiche Darstellung der Straße nahezu erhalten bleibt.

In diesem Fall würden also bei Wiedergabe des von der Kamera gelieferten Bildhelligkeitssignals kleine Tropfen auf der Scheibenoberfläche so gut wie nicht sichtbar sein. Eine Reduzierung der Blendenöffnung und dadurch erweiterte Tiefenschärfe empfiehlt sich nicht, da dadurch Regentropfen auf der Scheibenoberfläche und sehr weit entfernte Objekte gleich scharf erscheinen.

Durch Tropfen verursachte "Störinformationen" überlagern sich dann mit der Nutzinformation der Straße und können zu einer Fehleinschätzung bei der rechnergestützten Bewertung der aktuellen Fahr-Situation führen.

Soll die Bildinformation weit entfernter Objekte möglichst nicht durch eine Benetzung der Scheibenoberfläche gestört werden, kann mit Vorteil eine weite Objektivöffnung bei Fokussierung des Objektives auf nahezu unendlich gewählt werden.

Die Tiefenschärfe wird dadurch verringert und bei Fokussierung der Kamera auf nahezu unendlich werden Bilddetails in unmittelbarer Nähe nicht mehr erfasst. Auftreffende Regentropfen haben somit bis zu einem gewissen Grad kaum Einfluss auf die Bildqualität weit entfernter Objekte.

Ohne weitere Maßnahmen ist in dieser Anordnung eine Detektion, insbesondere von kleinen Regentropfen aus der Bildinformation der Kamera mittels entsprechender Algorithmen kaum möglich.

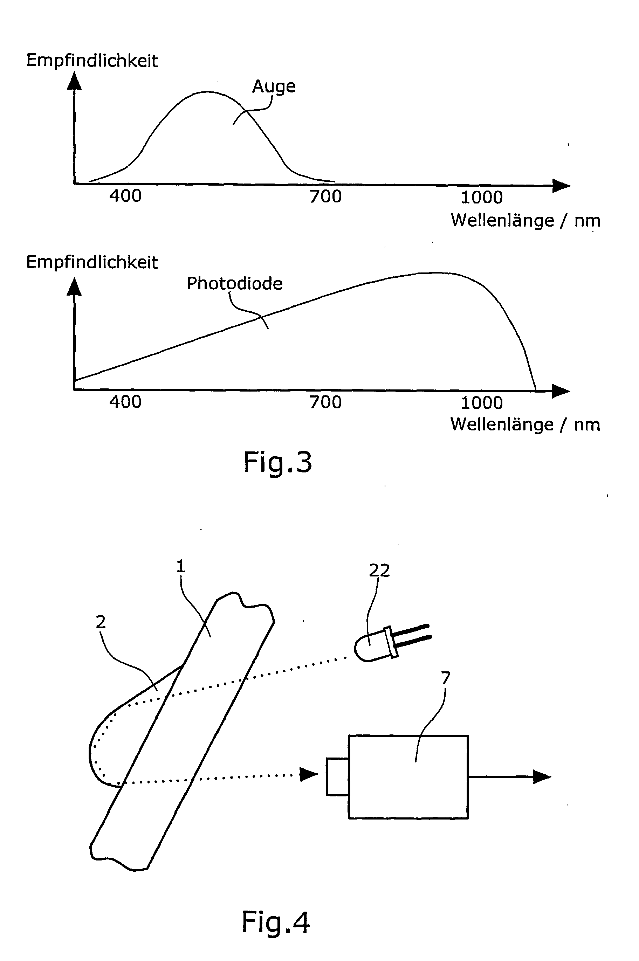

Um trotz der "unscharfen" Bildinformation der Scheibenoberfläche auch kleinste Tropfen noch einwandfrei zu detektieren, nutzt die hier beschriebene Anordnung den Effekt, dass eine auf Silizium-Basis aufgebautes Video Kamera einen weit größeren spektralen Bereich abdeckt als das menschliche Auge. So ist im Gegensatz zum menschlichem Auge eine Kamera noch im nahen Infrarot-Bereich, also bei Wellenlängen von 700 - 1000nm sensibel bzw. hat in diesem Bereich sogar das Maximum der Empfindlichkeit. Fig. 3 zeigt den Unterschied des Empfindlichkeitsbereiches des Auges im Verhältnis zum Empfindlichkeitsbereich von Silizium.

Im allgemeinen wird im Kamerabetrieb der Infrarotbereich durch Sperrfilter unterdrückt. Infrarotanteile würden sich ansonsten in der Videoinformation wiederfinden und die dem Auge gewöhnte Helligkeitsdarstellung einer bekannten Bildinformation bei einer Monitordarstellung möglicherweise verfremden.

Im hier vorgestellten Anwendungsbeispiel wird ausdrücklich auf ein IR-Sperrfilter verzichtet. Dieses schadet jedoch nicht, da die Bildinformation nicht über einen Monitor dargestellt wird.

Zur Detektion von Regentropfenbelag 2 auf der Scheibenoberfläche 1 wird nun über eine z. B. IR-Lichtquelle 22 Infrarotlicht 23 in einem zur Pixel-, Zeilen- oder Bildwechselfrequenz bestimmten Taktverhältnis in die von der Kamera 7 genutzte Fensterbereich eingestrahlt.

Dies kann z.B. durch Infrarot-LED's mit z.B. 880 nm Wellenlänge geschehen, die ungefähr parallel zur Kamerablickrichtung gepulstes Licht in die Scheibe einstrahlen. Der besseren Wirksamkeit halber sollte die Frontscheibe in diesem Bereich nicht IR-sperrend sein.

Das IR-Licht 23 wird zumindest teilweise an den auf der Scheibenoberfläche 1 auflegenden Regentropfen 2 durch Mehrfachbrechung zur Kamera zurückreflektiert, (siehe Lichtstrahl 24 in Fig. 2), wie es in Fig. 4 prinzipiell dargestellt ist.

Vorteilhafterweise wird das IR-Licht nicht nur an den Tropfen reflektiert, die direkt auf der Schei,be auflegen, sondern auch an sich in der Luft befindliche Tropfen bis zu einem gewissen Abstand vor der Scheibenoberfläche.

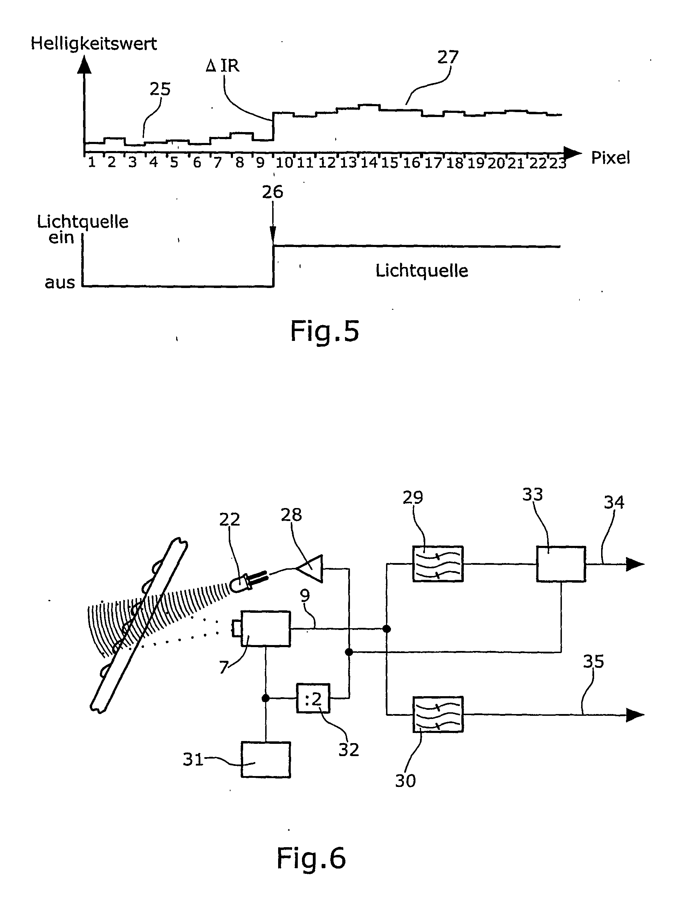

Fig. 5 zeigt eine zeilensequente Abtastung des Kamerabildes über eine bestimmte Anzahl Pixel, z.B. 1 bis 10.

Zum leichteren Verständnis wurde eine gleichmäßig beleuchtete Fläche als Hintergrundbild angenommen (siehe den Signalverlauf 25 in Fig. 5), die dem elektrischen Wert der Bildhelligkeit der abgetasteten Fläche entspricht.

Zum Zeitpunkt 26 wurde die IR-Lichtquelle zugeschaltet und es ergibt sich jetzt der Signalverlauf 27.

Der nun zusätzlich hinzugekommene Wert Δ IR entspricht nun dem an den auf der Scheibenoberfläche an den Tropfen reflektierten Wert der IR-Strahlung. Der Wert der an den Tropfen zurückgeworfenen IR-Lichtmenge Δ IR repräsentiert somit statistisch die Größe der Benetzung der Scheibenoberfläche.

Ohne Benetzung ist dieser Wert Δ IR nahezu 0 und berücksichtigt nur den konstanten Wert einer möglichen Reflexion an der Scheibe selbst, bzw. an Verschmutzungen auf der Scheibe.

Da in der Praxis natürlich die Kamera ein sich ständig veränderndes Bild und daher auch sich verändernde Zeileninformation liefert, kann mit dieser Methode noch nicht sicher genug zwischen Bildinformation und Wertänderungen durch zusätzliche Reflexion an Regentropfen unterschieden werden.

Das ausgesandte IR-Signal (Taktung der IR-Lichtquelle 22) wird daher in einem Rhythmus gepulst, der in einem möglichst direkten Verhältnis zur Pixel-, Zeilen- oder Bildfrequenz steht (im Ausführungsbeispiel gemäß Fig. 6 mit der halben Pixelfrequenz). Dabei wird bei jedem zweiten Pixel die IR-Lichtquelle 22 eingeschaltet.

Die Synchronisation der IR-Sendephase zur Pixel-, Zeilen- oder Bildfrequenz ist nicht unbedingt notwendig, erleichtert jedoch die weitere Signalauswertung erheblich.

Im Ausführungsbeispiel (Fig. 6) wird dazu der Pixeltakt 31 über den Teiler 32 auf die halbe Pixeltaktfrequenz heruntergeteilt und der Treiberstufe 28 für die IR-Quelle 22 zugeführt. Andere Verhältnisse zwischen der Belichtungsfrequenz der Kamera 7 und der Taktrate der IR-Lichtquelle 22 (z. B. 1:3, 1:4) sind ebenfalls möglich.

Damit wird gewährleistet, dass bei jedem zweiten Pixel die IR-Quelle 22 eingeschaltet ist.

Beträgt z.B. die Abfragezeit für ein Pixel 50 ns, ergibt sich an der IR-Quelle ein Rechteck-Signal mit einer Frequenz von 10 MHz, entsprechend 50 ns Einschaltzeit zu 50 ns Ausschaltzeit.

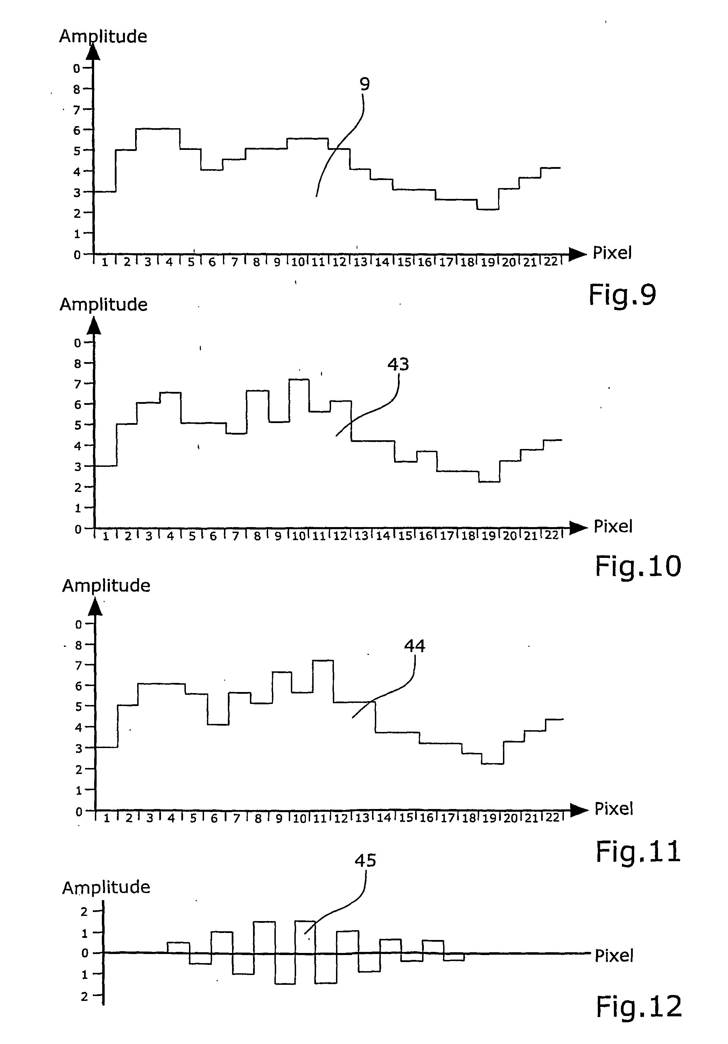

Natürlich wird die pixelbezogene abgetastete Bild- bzw. Helligkeitsinformation in einer Zeile nicht den in Fig. 5 dargestellten flachen Verlauf nehmen. Abhängig vom Bildinhalt kann sich jeder beliebige Wert zu jeder Zeit einstellen (z. B. wie in Fig. 9 gezeigt).

Um trotzdem die Information der Benetzung vom Helligkeitssignal zu trennen, wird im Ausführungsbeispiel gemäß Fig. 6 das von der Kamera 7 gelieferte Helligkeitssignal 9 über einen Bandpass- bzw. Hochpass-Filter 29 mit einem Durchlassbereich analog zur Frequenz der IR-Lichtquelle geschickt.

Dieser Bandpass- bzw. Hochpass-Filter 29 trennt die niederfrequenteren Anteile der Bildinformation ab. Am Ausgang des Filters 29 steht als Signalinformation hauptsächlich die an den Regentropfen reflektierten Signalanteile der IR-Lichtquelle 22 als Wechselspannungsinformation an.

Ein Synchrondemodulator 33 unterdrückt weiterhin zufällig auftretende Spektralanteile im Bildsignal, z.B. durch Abtastung einer periodischen hell-dunkel-Fläche mit ähnlicher Frequenz wie die der IR-Lichtquelle 22.

Am Ausgang des Synchrondemodulators 33 liegt die Benetzungsinformation 34 als Gleichspannungssignal an.

Die Frequenz der IR-Lichtquelle 22 erscheint auch als Spektrallinie in der von der Kamera 7 gelieferten Bildsignalinformation und kann mit geeigneten Maßnahmen, z.B. einem einfachem Sperrfilter 30 ausgeschlossen werden.

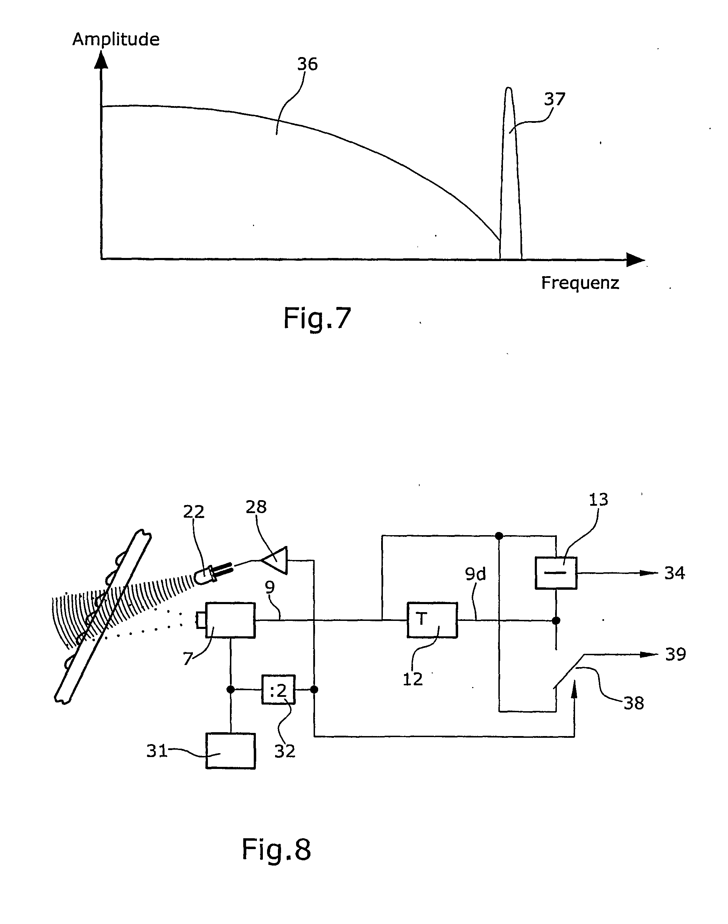

Fig. 7 zeigt das statistische Spektrum des abgetasteten Bildhelligkeitssignals.

Die spektrale Linie 37 der IR-Lichtquelle 22 liegt am oberen Ende des Spektrums, also in einem Bereich, in dem der geringste Energieanteil des Bildhelligkeitsspektrums 36 zu erwarten ist.

Im Ausführungsbeispiel nach Fig. 6 wirkt sich nun die "Unschärfe" der Regentropfendarstellung im Gegensatz zu einer "scharfen" Abbildung positiv aus. Während ein scharf abgebildeter und somit kleiner Reflexionspunkt z.B. nur ein Pixel umfassen und somit wie ein Signalsprung der Bildinformation mit Filter 29 herausgefiltert würde, wird ein "unscharfer" Reflexionspunkt eine Mehrzahl von Pixels umfassen und somit nach Einschwingen des Filters 29 ein deutliches Signal hervorrufen.

Mit dieser Anordnung lässt sich relativ genau auftretender Tropfenbelag detektieren, jedoch ergibt die Trennung der hochfrequenten IR-Signalinformation aus der Bildhelligkeitsinformation möglicherweise noch nicht die erforderliche Genauigkeit.

Fig. 8 zeigt eine Schaltungsanordnung zur nahezu perfekten Trennung von der Signalinformation der Benetzung und dem Bildhelligkeitssignal.

Betrachtet man eine Bildinformation Zeile für Zeile, zeigt sich, dass sich der Signalverlauf von Zeile zu Zeile in der Regel nur unwesentlich ändert.

Taktet man nun innerhalb geraden Zeilenzahlen die IR-Lichtquelle 22 z.B. in den geraden Pixelzahlen, in ungeraden Zeilenzahlen in den ungeraden Pixelzahlen, kann durch einfache Addition des Helligkeitssignals einer Zeile mit der invertierten Information der vorhergehenden Zeile als Ergebnis ein nahezu von der Bildinformation unabhängiges Signal für die Scheibenbenetzung erhalten werden. Dies wird in Fign. 9 bis 12 dargestellt. Fig. 9 zeigt ein beliebiges Bildhelligkeitssignal 9 über einen Zeitraum von 22 Pixel. In der Darstellung nach Fig. 10 wurde die IR-Lichtquelle 22 in einer Zeile bei Belichtung der geraden Pixel, also Pixel 2,4,6 ... eingeschaltet und es ergibt sich nun ein Bildsignal 43 mit einer der Benetzung entsprechenden Modulation.

Eine Zeile später wurde die IR-Lichtquelle 22 bei Belichtung der ungeraden Pixel, also Pixel 1,3,5 ... eingeschaltet und es ergibt sich ein Bildsignal 44 mit einer zur ersten Zeile um 180° versetzten Modulation, (Fig. 11).

Die Differenz beider Bildsignale 43 und 44 (s. Fig. 12) ergibt nun die reine Benetzungsinformation 45. Diese zeigt einen "Regentropfen" im Bereich der Pixel 9 und 10, der aber auf Grund der Unschärfe der Abbildung auf der sensitiven Kamerafläche über wesentlich mehr Pixel verteilt erscheint.

Im Ausführungsbeispiel gemäß Fig. 8 wird das Helligkeitssignal 9 der Kamera 7 auf eine Verzögerungsschaltung 12 mit der Verzögerungsdauer einer horizontalen Zeile gegeben. Das Differenzsignal 34 aus dem um eine Zeile verzögerten Helligkeitssignal und dem unverzögertem Helligkeitssignal entspricht der Benetzung der Scheibenoberfläche. Am Ausgang der Differenzierstufe 13 steht bei Benetzung ein Wechselsignal mit der halben Pixeltaktfrequenz an.

Zur zusätzlichen Erhöhung der Detektionssicherheit kann noch der im Ausführungsbeispiel gemäß Fig. 6 verwendete Synchrondetektor 33 nachgeschaltet werden.

Mit einer zweiten Schaltungsanordnung kann nun in dem Ausführungsbeispiel gemäß Fig. 8 das reine Helligkeitssignal ohne die Benetzungsinformation gewonnen werden. Der Umschalter 38 schaltet synchron mit der Pixeltaktrate zwischen dem direkten Helligkeitssignal B9 und dem um eine Zeile verzögertem Helligkeitssignal so um, dass immer nur Pixel erfasst werden, bei dem die IR-Lichtquelle abgeschaltet war.

Am Ausgang des Schalters 38 steht somit das reine Helligkeitssignal 39 ohne die Benetzungsinformation an.

### Benetzungsdetektion bei Kameras mit hoher Bildwechselfrequenz

Selbstverständlich können auch andere Schaltfolgen der IR-Lichtquelle 22 zur Erfassung der Benetzung der Scheibenoberfläche genutzt werden. Z.B. kann während der gesamten Abtastzeit eines Bildes die IR-Lichtquelle 22 eingeschaltet werden, während beim nächsten Bild die IR-Lichtquelle 22 ausgeschaltet ist.

Bei einer schnellen Bildwechselfrequenz wird sich von einem Bild zum nächsten die Bildsignalamplitude bzw. deren über die Abtastzeit integrierter Wert nur unwesentlich ändern, so dass sich bei Benetzung ein signifikantes Signalmuster ergibt.

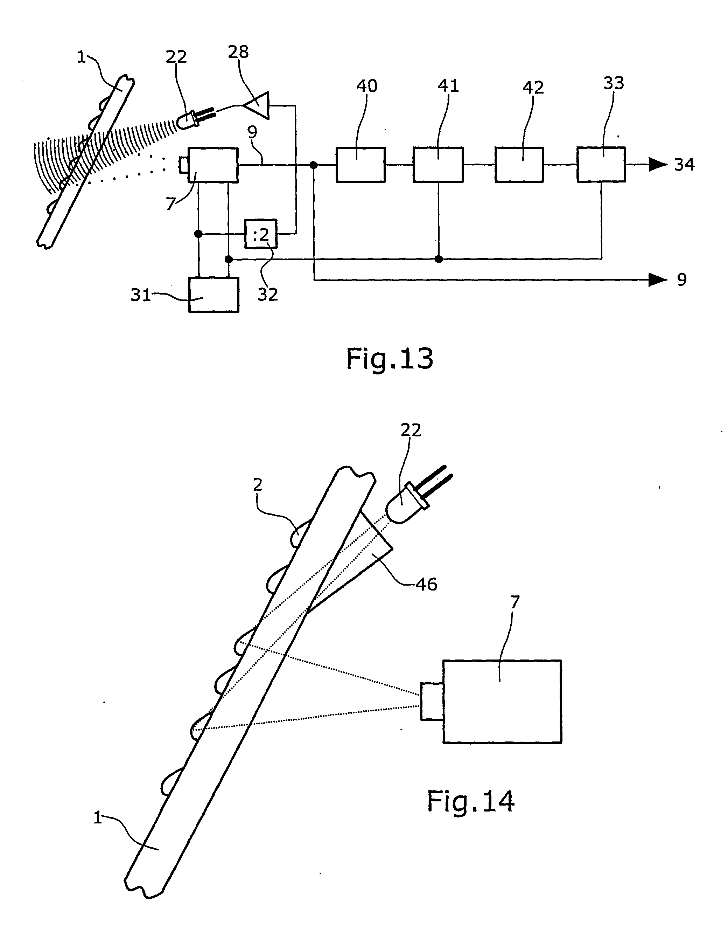

Fig. 13 zeigt ein Ausführungsbeispiel einer Anordnung zur Bildsequentiellen Detektion der Benetzung einer Scheibenoberfläche 1.

Die Kamera wird vom Taktgenerator 31 mit dem Pixel- und Bildwechseltakt versorgt. Das Ausgangssignal 9 der Kamera 7 wird ohne Benetzung von Bild zu Bild nahezu gleich sein, bei Benetzung wird wieder ein signifikantes, IR-Quellen-synchrones Signalmuster auftreten.

Im Integrator 40 wird der Gesamtdurchschnittswert des Helligkeitssignals eines jeweiligen Bildes gewonnen. Der Wertspeicher 41 übernimmt am Ende eines jeden Bildes dessen Gesamtdurchschnittswert der Helligkeitsamplitude.

Bei einer Benetzung der Scheibenoberfläche steht somit am Ausgang des Wertspeichers 41 eine Bildfrequenz-synchrone Wechselspannung an.

Filter 42 ist auf die Bildwechselfrequenz abgestimmt und liefert bei Benetzung am Ausgang ein entsprechendes Ausgangssignal, das nach einer Synchrondemodulation im Synchrondemodulator 33 und entsprechender Auswertung zur Steuerung des Scheibenwischers genutzt werden kann.

Zur Gewinnung eines benetzungssignalfreien Bildsignals kann natürlich jedes zweite Bild genutzt werden, bei dem die IR-Lichtquelle 22 nicht zugeschaltet war.

Die Gesamthelligkeit eines Kamerabildes einer Kamera mit hoher Bildwechselfrequenz ändert sich nur unwesentlich von einem Bild zum nächsten bzw. gleichmäßig z.B. bei Einfahrt in einen Tunnel. Dabei wird kein Ausgangssignal am Ausgang des Filters 42 generiert. Erst bei Benetzung der Scheibenoberfläche und dadurch entstehender bildsynchroner Amplitudenänderung entsteht ein entsprechendes Ausgangssignal.

Im Prinzip kann jede beliebige Schaltfolge der IR-Lichtquelle 22 genutzt werden, solange eine Differenzierung von durch die IR-Lichtquelle 22 beleuchtete Zeitabschnitte im Verhältnis zu unbeleuchteten Zeitabschnitten möglich ist.

### Einkoppelung der IR-Quelle von der Kamera aus

Die Einkopplung der Lichtquelle erfolgt am einfachsten durch ungefähr in Sichtlinie der Kamera 7 ausgestrahltes Licht.

Da ein Teil dieses Lichtes an einer Benetzung in alle Richtungen gestreut werden kann, würde möglicherweise ein Teil des reflektierten Lichtes auch den Fahrer bzw. Mitfahrer treffen.

Daher bietet sich für das ausgestrahlte Licht eine Wellenlänge an, die für das menschliche Auge nicht sichtbar ist. Dies ist der Bereich ab 700 nm, z.B. IR mit 880 nm (siehe Fig. 3).

Bei einer mechanischen Abschirmung der diffus reflektierten Lichtstrahlung an Regentropfen auf der Scheibenoberfläche hin zum Fahrer/Beifahrer kann natürlich jede Wellenlänge genutzt werden.

Eine weitere Methode der Einkoppelung ergibt sich durch eine direkte Einkoppelung des Lichtes in die Scheibe 1, z.B. bei Verwendung eines Prismas 46 gemäß der Anordnung von Fig. 14. Dabei braucht das Licht nur in die Scheibe ein- aber nicht ausgekoppelt zu werden. Die Auskoppelung hin zur Kamera 7 erfolgt dann über die Brechung an der tropfenförmigen Benetzung (wie in Fig. 4 schematisch gezeigt).

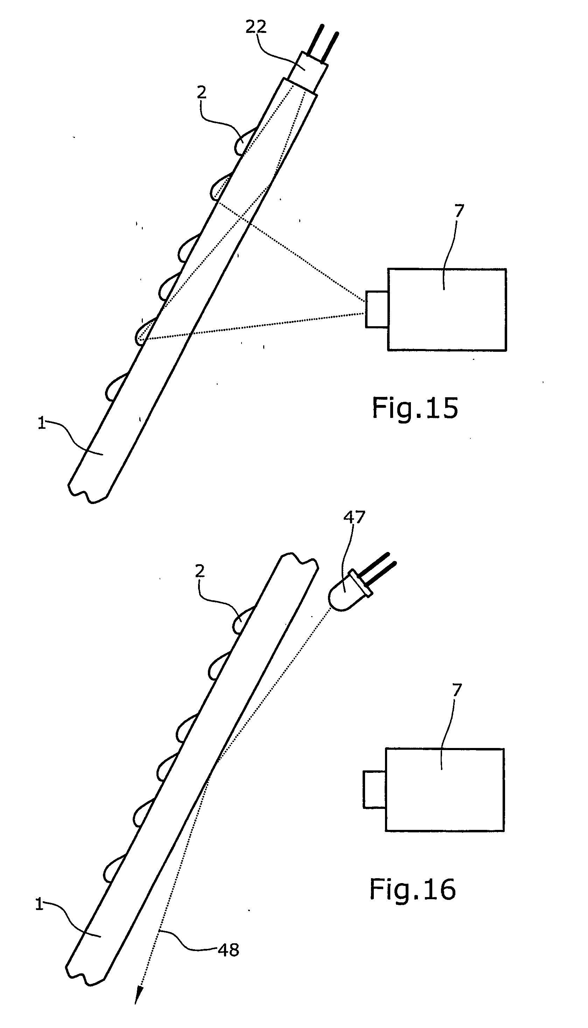

Fig. 15 zeigt eine seitliche Einkoppelung der Lichtquelle 22 in die Fahrzeugscheibe. Auf Grund der Totalreflexion innerhalb der Scheibe 1 bleibt das Licht vollständig in der Scheibe, solange keine Benetzung einen Übergang des Lichtes in einen Tropfen und somit auch eine Änderung des Totalreflexionswinkels bietet. In diesem Fall wird ein Teil des Lichtes in alle beliebigen Richtungen, also auch zur Kamera hin abgelenkt.

Die bisher vorgestellte Benetzungsdetektion reagiert hauptsächlich auf äußerliche Oberflächenbenetzung, wobei auch innere Benetzung, z.B. durch kondensierenden Atem, erfasst werden kann. Dies ist weniger der Fall bei einer Einstrahlung parallel der Kamerasichtlinie, jedoch deutlich ausgeprägt bei einer seitlichen Einkopplung gemäß Fig. 14 bzw. Fig. 15.

### Innenbelagsdetektion

Es besteht oft der Wunsch, den Innenbelag unabhängig von Regentropfen auf der Außenfläche der Scheibe detektieren zu können.

Durch eine entsprechende Anordnung von zwei Lichtquellen kann eine Auswahl getroffen werden, ob es sich um eine äußere Benetzung, z.B. Regentropfen, oder um eine innere Benetzung, z.B. kondensierender Atem handelt. Mit dieser Entscheidung kann beispielsweise das Gebläse sowie der Scheibenwischer getrennt gesteuert werden.

Zur Erkennung des Innenbelages wird eine zweite Lichtquelle 47 so angeordnet, dass ihr Licht auf die Innenfläche der Scheibe im nicht benetzten (betauten) Zustand nicht in diese eindringt, sondern möglichst total reflektiert wird (siehe Fig. 16).

Bei Auftreten von äußerer Benetzung wird der Lichtstrahl der zweiten Lichtquelle 47 nicht beeinflusst. Lediglich bei einer inneren Benetzung 49 wird der Lichtstrahl der Lichtquelle 47 diffus gestreut, so dass auch ein Teil des Lichtes die Kamera 7 erreicht.

Die Lichtquelle 47 kann vorzugsweise mit einer eigenen Taktfrequenz bzw. abwechselnd mit der IR-Lichtquelle 22 angesteuert werden, um eine innere Benetzung von einer äußeren Benetzung zu unterscheiden.

Dabei ist zu beachten, dass ein innerer Belag sich auch auf eine Detektion der äußeren Oberfläche auswirkt, wenn beide Lichtquellen sich im Innenraum des Fahrzeuges befinden.

Zieht man den durch die Innenraumdetektion erzeugten Wert vom Wert der äußeren Regentropfendetektion, der ja auch der Wert der Innenraumdetektion mit beinhaltet, ab, erhält man den eigentlichen Wert für die äußere Benetzung der Scheibe.

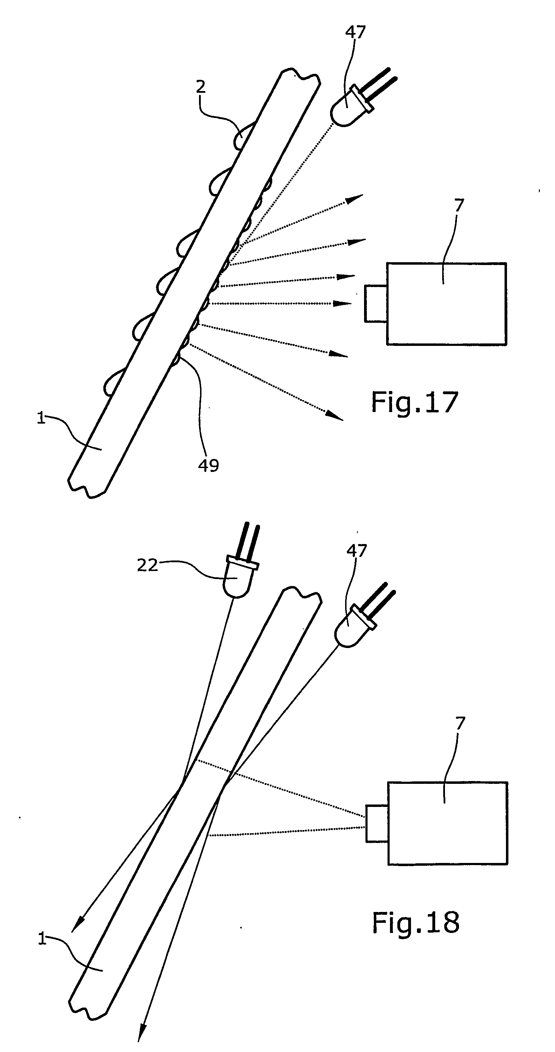

Besteht die Möglichkeit der Anordnung einer Lichtquelle außerhalb der Fahrzeugscheibe (z. B. im Rahmen der Scheiben oder einem (Scheiben)überstand der Fahrzeugkarosserie, lässt sich der Wert der inneren Benetzung und der Wert der äußeren Benetzung vollkommen getrennt voneinander ermitteln (siehe Fig. 18).

### Bezugszeichenliste

- 1: Frontscheibe
- 2: Benetzung, Regentropfen
- 3: Gehäuse
- 4: Sendeelement
- 5: Empfangselement
- 6: Lichtweg
- 7: Kamera
- 8: Objektiv
- 9: Bildsignal 9d verzögertes Bildsignal
- 10: Kamerasichtlinie
- 11: Kamerasichtwinkel
- 12: Laufzeitglied
- 13: Subtrahierstufe
- 14: differenziertes Bildsignal
- 15: Fensterkomparator
- 16: Digitales Benetzungssignal
- 17: Bildsignal "Strasse"
- 18: Differenzierstufe
- 19: Tropfendetektion
- 20: Hintergrundsignal
- 21: Schwellwerte
- 22: Lichtquelle, LED
- 23: ausgesandter Lichtstrahl
- 24: am Tropfen reflektierter Lichtstrahl
- 25: Bildsignal ohne zugeschalteter Lichtquelle
- 26: Differenz bei zugeschalteter Lichtquelle
- 27: Bildsignal mit zugeschalteter Lichtquelle
- 28: Treiberstufe
- 29: Bandpassfilter
- 30: Sperrfilter
- 31: Taktgenerator
- 32: Teiler
- 33: Synchrondemodulator
- 34: Benetzungsinforfl7latiofl
- 35: Gefilterte Bildinformation
- 36: Spektrum Bildsignal
- 37: Spektrum Benetzungssignal

## Patentansprüche

1. Vorrichtung zur Detektion der Benetzung und/oder Verschmutzung einer Scheibenoberfläche insbesondere eines Kraftfahrzeuges, mit
- einer Kamera mit einem Sensor, der eine Vielzahl von in Array-Form angeordneten einem Belichtungszyklus entsprechend belichtbaren, lichtempfindlichen Pixel aufweist, und mit einer Fokussieroptik für einen auf nahezu unendlich eingestellten Fokus der Kamera und
- einer Lichtquelle zur Beleuchtung eines von der Kamera erfassbaren Erfassungsbereichs der Scheibenoberfläche,
- wobei die Lichtquelle in einem vorgebbaren EIN/AUS-Zyklus ein- und ausschaltbar ist,
**dadurch gekennzeichnet, dass**
- der EIN/AUS-Zyklus mit dem Belichtungszyklus des Sensors der Kamera synchronisiert ist und
- eine Benetzung/Verschmutzung der Scheibenoberfläche durch Vergleich der Bildinformation des Sensors der Kamera bei aus- und bei eingeschalteter Lichtquelle detektierbar ist.

2. Vorrichtung nach Anspruch 1, **dadurch gekennzeichnet, dass** pro Belichtungszyklus ein Pixel, eine Pixelzeile oder sämtliche Pixel des Sensors der Kamera belichtbar ist/sind und dass der EIN/AUS-Zyklus mit der Pixel-, Zeilen- bzw. Bildabfragefrequenz des Sensors der Kamera synchronisiert ist.

3. Vorrichtung nach Anspruch 1 oder 2, **dadurch gekennzeichnet, dass** die Lichtquelle elektromagnetische Strahlung im für das Auge nicht sichtbaren Wellenlängenbereich abgibt.

4. Vorrichtung nach einem der Ansprüche 1 bis 3, **dadurch gekennzeichnet, dass** die Lichtquelle sinusförmig ansteuerbar ist.

5. Vorrichtung nach einem der Ansprüche 1 bis 4, **dadurch gekennzeichnet, dass** eine Benetzung der Scheibenoberfläche durch Ausfiltern und Auswerten der EIN/AUS-Zyklusfrequenz, mit der die Lichtquelle ansteuerbar ist, unter Zuhilfenahme eines Synchrondemodulators und/oder einer Filteranordnung detektierbar ist.

6. Vorrichtung nach einem der Ansprüche 1 bis 5, **dadurch gekennzeichnet, dass** aus dem Ausgangssignal des Sensors der Kamera ein Bildhelligkeitssignal gewinnbar ist, und zwar durch Filtern der EIN/AUS-Zyklusfrequenz aus diesem Bildhelligkeitssignal.

7. Vorrichtung nach einem der Ansprüche 1 bis 6, **dadurch gekennzeichnet, dass** der EIN/AUS-Zyklus von Zeile zu Zeile um 180° phasenverschoben ist.

8. Vorrichtung nach einem der Ansprüche 1 bis 7, **dadurch gekennzeichnet, dass** zur Gewinnung eines eine Benetzung anzeigenden Signals aus dem Signal des Sensors der Kamera die Signale der Pixel zweier aufeinanderfolgender Zeilen des Sensors subtrahiert werden.

9. Vorrichtung nach Anspruch 8, **dadurch gekennzeichnet, dass** das Benetzungssignal einer Filterung und/oder Synchrondemodulation unterzogen wird.

10. Vorrichtung nach einem der Ansprüche 1 bis 9, **dadurch gekennzeichnet, dass** zur Gewinnung eines Bildsignals mit überlagerter Benetzungsinformation die Signale zweier aufeinanderfolgender Zeilen des Sensors addiert werden.

11. Vorrichtung nach einem der Ansprüche 1 bis 10, **dadurch gekennzeichnet, dass** zur Gewinnung eines Bildsignals ohne Benetzungsinformation zwischen zwei hintereinanderliegenden Zeilen des Sensors der Kamera die Lichtquelle schalttaktsynchron umschaltbar ist.

12. Vorrichtung nach einem der Ansprüche 1 bis 11, **dadurch gekennzeichnet, dass** innerhalb eines Zeitabschnitts des Ausgangssignals des Sensors der Kamera eine Mittelwertbildung ohne Lichtquellenzuschaltung erfolgt, dass für einen anderen Zeitabschnitt des Ausgangssignals des Sensors der Kamera eine Mittelwertbildung mit Lichtquellenzuschaltung erfolgt und dass zur Gewinnung eines Benetzungssignals bzw. Benetzungswertes beide Mittelwerte verglichen werden.

13. Vorrichtung nach Anspruch 12, **gekennzeichnet durch** einen wechselseitigen Vergleich zwischen dem Mittelwert der Zeitabschnitte ohne Lichtquellenzuschaltung und dem Mittelwert der Zeitabschnitte mit Lichtquellenzuschaltung mittels Filterung des Differenzwertes und/oder Synchrondemodulation zwecks Detektion der Benetzung.

14. Vorrichtung nach einem der Ansprüche 1 bis 13, **dadurch gekennzeichnet, dass** das Licht der Lichtquelle direkt in die Scheibe einkoppelbar ist und dass an der der Einkopplung gegenüberliegenden Seite bei Benetzung eine Reflexion zur Kamera hin erfolgt.

15. Vorrichtung nach Anspruch 14, **dadurch gekennzeichnet, dass** die Einkopplung des Lichts seitlich in die Scheibe oder durch ein Prisma in die Oberfläche der Scheibe erfolgt.

16. Vorrichtung nach einem der Ansprüche 1 bis 15, **dadurch gekennzeichnet, dass** die elektromagnetische Strahlung der Lichtquelle mit totaler Reflexion auf diejenige Oberfläche der Scheibe auftrifft, auf der eine Benetzung zu detektieren ist.

17. Vorrichtung nach einem der Ansprüche 1 bis 16, **gekennzeichnet durch** eine zweite Lichtquelle, deren Licht unter Totalreflexion zur Beschlagsdetektion an der Scheibeninnenseite auf diese auftrifft.

18. Vorrichtung nach Anspruch 17, **dadurch gekennzeichnet, dass** die beiden Lichtquellen zur getrennten Detektion von Benetzung auf der Außenseite der Scheibe und Beschlag auf der Innenseite der Scheibe getrennt ansteuerbar sind.

19. Vorrichtung nach Anspruch 17, **dadurch gekennzeichnet, dass** die beiden Lichtquellen mit verschiedenen Taktfrequenzen gleichzeitig ansteuerbar sind.

20. Vorrichtung nach einem der Ansprüche 17 bis 19, **gekennzeichnet durch** das Subtrahieren eines Wertes der inneren Reflexion (zweite Lichtquelle) vom Wert der inneren und äußeren Reflexion (erste Lichtquelle) zur Gewinnung eines Wertes für die äußere Benetzung.

21. Vorrichtung nach einem der Ansprüche 1 bis 16 und einem der Ansprüche 17 bis 20, **dadurch gekennzeichnet, dass** das Licht der ersten Lichtquelle unter Totalreflexion auf die Innenseite der Scheibe zur Innenbeschlagsdetektion und das Licht der zweiten Lichtquelle unter Totalreflexion auf die äußere Seite der Scheibe zur Detektion einer äußeren Benetzung derselben fällt.

22. Vorrichtung nach einem der Ansprüche 1 bis 21, **dadurch gekennzeichnet, dass** die Fokussieroptik der Kamera zwischen nahezu unendlich und der Scheibenoberfläche verstellbar ist.

23. Vorrichtung nach einem der Ansprüche 1 bis 22, **gekennzeichnet durch** einen Detektor zur Detektion von Kontrastsprüngen im Signal des Sensors zur Erfassung der Benetzung/Verschmutzung auf der Scheibenoberfläche.

## Claims

1. Device for detecting the wetting and/or soiling of a windscreen surface, in particular in a vehicle, comprising
- a camera with a sensor having a plurality of light-sensitive pixels arranged as an array and adapted to be illuminated according to an illumination cycle, and having a focussing optic for a camera focus set to almost infinite, and
- a light source for illuminating a detection portion of the screen surface detectable by the camera,
- wherein the light source may be switched on and off according to a predeterminable ON/OFF cycle,
**characterized in that**
- the ON/OFF cycle is synchronized to the illumination cycle of the camera sensor, and
- the wetting/soiling of the screen surface may be detected by comparing the image information from the sensor of the camera when the light source is turned on and when the light source is turned off.

2. Device of claim 1, wherein one pixel, one pixel line or all pixels of the camera sensor may be illuminated per illumination cycle and wherein the ON/OFF cycle is synchronized with the pixel-, line- or image-scanning frequency of the camera sensor.

3. Device of claim 1 or 2, wherein the light source emits electromagnetic radiation in a wavelength range not visible to the human eye.

4. Device of one of claims 1 to 3, wherein the light source is sinusoidally controllable.

5. Device of one of claims 1 to 4, wherein a wetting of the screen surface is detectable by filtering out and evaluating the ON/OFF cycle frequency with which the light source may be driven, using a synchronous demodulator and/or a filter arrangement.

6. Device of one of claims 1 to 5, wherein an image luminosity signal may be obtained from the output signal of the camera sensor by filtering the ON/OFF cycle frequency from this image luminosity signal.

7. Device of one of claims 1 to 6, wherein the ON/OFF cycle is phase-shifted by 180° from one line to the next.

8. Device of one of claims 1 to 7, wherein, for obtaining a signal indicating wetting from the signal of the camera sensor, the signals of the pixels of two successive lines of the sensor are subtracted.

9. Device of claim 8, wherein the wetting signal is subjected to filtering and/or synchronous demodulation.

10. Device of one of claims 1 to 9, wherein, for obtaining an image signal with superimposed wetting information, the signals of two successive lines of the sensor are added.

11. Device of one of claims 1 to 10, wherein, for obtaining an image signal without wetting information, the light source may be switched synchronously to the switching clock between two successive lines of the camera sensor.

12. Device of one of claims 1 to 11, wherein, within a period of the output signal of the camera sensor, an averaging without activation of the light source is effected, wherein, for another period of the output signal of the camera sensor, an averaging with activation of the light source is effected, and wherein both average values are compared to obtain a wetting signal or a wetting value.

13. Device of claim 12, **characterized by** a mutual comparison between the average value for the periods without light source activation and the average value for the periods with light source activation by means of filtering the differential value and/or synchronous demodulation for the purpose of detecting the wetting.

14. Device of one of claims 1 to 13, wherein the light from the light source may be coupled directly into the screen and, given a wetting, a reflection towards the camera occurs on the side opposite the coupling.

15. Device of claim 14, wherein the coupling of the light is effected laterally into the screen or with a prism into the surface of the screen.

16. Device of one of claims 1 to 15, wherein the electromagnetic radiation of the light source impinges with total reflection on that surface of the screen on which a wetting is to be detected.

17. Device of one of claims 1 to 16, **characterized by** a second light source whose light impinges under total reflection on the inside of the screen to detect wetting thereon.

18. Device of claim 17, wherein both light sources may be driven separately for a separate detection of wetting on the outside of the screen and fogging on the inside of the screen.

19. Device of claim 17, wherein both light sources may be driven simultaneously using different clock frequencies.

20. Device of one of claims 17 to 19, **characterized by** the subtraction of a value of the inner reflection (second light source) from the value of the inner and outer reflection (first light source) in order to obtain a value for the external wetting.

21. Device of one of claims 1 to 16 and one of claims 17 to 20, wherein the light of the first light source impinges under total reflection on the inner side of the screen for the detection of interior fogging and the light from the second light source impinges under total reflection on the outer side of the screen for the detection of an external wetting.

22. Device of one of claims 1 to 21, wherein the focussing optics of the camera may be adjusted between almost infinite and the screen surface.

23. Device of one of claims 1 to 22, **characterized by** a detector for the detection of contrast steps in the signal from the sensor for detecting the wetting/soiling on the screen surface.

## Revendications

1. Dispositif pour détecter le mouillage et/ou la salissure d'une surface de vitre en particulier d'un véhicule, muni
- d'une caméra avec un détecteur qui présente une multitude de pixels photosensibles éclairables en fonction d'un cycle d'éclairage, disposés en forme de tableau, et avec une optique de focalisation pour obtenir un point focal réglé presque sur l'infini, et
- d'une source lumineuse pour éclairer une zone de détection de la surface de vitre détectable par la caméra,
- la source lumineuse pouvant être activée et désactivée dans un cycle marche/arrêt pouvant être prédéfini,
**caractérisé en ce que**
- le cycle marche/arrêt est synchronisé avec le cycle d'éclairage du détecteur de la caméra et
- le mouillage/la salissure de la surface de vitre peut être détecté en comparant les informations vidéos du détecteur de la caméra avec la source lumineuse éteinte et allumée.

2. Dispositif selon la revendication 1, **caractérisé en ce qu'**un pixel, une ligne de pixels ou tous les pixels du détecteur de la caméra peut/peuvent être éclairé(s) à chaque cycle d'éclairage et que le cycle marche/arrêt est synchronisé avec la fréquence d'interrogation des pixels, des lignes ou des images du détecteur de la caméra.

3. Dispositif selon la revendication 1 ou 2, **caractérisé en ce que** la source lumineuse émet un rayonnement électromagnétique sur la plage de longueur d'onde invisible pour l'oeil humain.

4. Dispositif selon l'une des revendications 1 à 3, **caractérisé en ce que** la source lumineuse peut être contrôlée de manière sinusoïdale.

5. Dispositif selon l'une des revendications 1 à 4, **caractérisé en ce qu'**un mouillage de la surface de vitre peut être détecté en filtrant et en analysant la fréquence du cycle marche/arrêt avec laquelle la source lumineuse est contrôlable, à l'aide d'un démodulateur synchrone et/ou d'un dispositif de filtrage.

6. Dispositif selon l'une des revendications 1 à 5, **caractérisé en ce qu'**à partir du signal de sortie du détecteur de la caméra peut être généré un signal de luminosité d'image, et cela en filtrant la fréquence du cycle marche/arrêt de ce signal de luminosité d'image.

7. Dispositif selon l'une des revendications 1 à 6, **caractérisé en ce que** le cycle marche/arrêt est déphasé de 180° d'une ligne à l'autre.

8. Dispositif selon l'une des revendications 1 à 7, **caractérisé en ce que**, pour générer un signal indiquant un mouillage à partir du signal du détecteur de la caméra, les signaux des pixels de deux lignes successives du détecteur sont soustraits les uns aux autres.

9. Dispositif selon l'une des revendications 8, **caractérisé en ce que** le signal de mouillage est soumis à un filtrage et/ou une démodulation synchrone.

10. Dispositif selon l'une des revendications 1 à 9, **caractérisé en ce que**, pour générer un signal vidéo avec une information de mouillage superposée, les signaux de deux lignes successives du détecteur sont additionnés.

11. Dispositif selon l'une des revendications 1 à 10, **caractérisé en ce que**, pour générer un signal vidéo sans information de mouillage, la source lumineuse est inversée de manière synchrone avec la cadence de commutation entre deux lignes successives du détecteur de la caméra.

12. Dispositif selon l'une des revendications 1 à 11, **caractérisé en ce qu'**un établissement de valeur moyenne sans raccordement de la source lumineuse a lieu dans une période du signal de sortie du détecteur de la caméra, un établissement de valeur moyenne avec raccordement de la source lumineuse a lieu pour une autre période du signal de sortie du détecteur de la caméra et les deux valeurs moyennes sont comparées pour générer un signal de mouillage ou une valeur de mouillage.

13. Dispositif selon la revendication 12, **caractérisé en ce qu'**une comparaison mutuelle entre la valeur moyenne des périodes sans extinction de la source lumineuse et la valeur moyenne des périodes avec extinction de la source lumineuse est effectuée par filtrage de la valeur différentielle et/ou démodulation synchrone pour détecter le mouillage.

14. Dispositif selon l'une des revendications 1 à 13, **caractérisé en ce que** la lumière de la source lumineuse peut être couplée directement dans la vitre et qu'une réflexion vers la caméra se produit sur la face opposée au couplage en cas de mouillage.

15. Dispositif selon la revendication 14, **caractérisé en ce que** le couplage de la lumière se fait latéralement dans la vitre ou par un prisme dans la surface de la vitre.

16. Dispositif selon l'une des revendications 1 à 15, **caractérisé en ce que** le rayonnement électromagnétique de la source lumineuse se fait avec une réflexion totale sur la surface de la vitre sur laquelle un mouillage doit être détecté.

17. Dispositif selon l'une des revendications 1 à 16, **caractérisé par** une deuxième source lumineuse dont la lumière est projetée sur la face intérieure de la vitre et s'y réfléchit totalement pour détecter de la condensation sur celle-ci.

18. Dispositif selon la revendication 17, **caractérisé en ce que** les deux sources lumineuses sont contrôlables séparément pour détecter séparément le mouillage sur la face extérieure de la vitre et la condensation sur la face intérieure de la vitre.

19. Dispositif selon la revendication 17, **caractérisé en ce que** les deux sources lumineuses peuvent être contrôlées simultanément avec des fréquences de cadence différentes.

20. Dispositif selon l'une des revendications 17 à 19, **caractérisé par** la soustraction d'une valeur de la réflexion intérieure (deuxième source lumineuse) de la valeur de la réflexion intérieure et extérieure (première source lumineuse) pour générer une valeur pour le mouillage extérieur.

21. Dispositif selon l'une des revendications 1 à 16 et l'une des revendications 17 à 20, **caractérisé en ce que** la lumière de la première source lumineuse tombe avec une réflexion totale sur la face intérieure de la vitre pour détecter une condensation intérieure et la lumière de la deuxième source lumineuse tombe avec une réflexion totale sur la face extérieure de la vitre pour détecter un mouillage extérieur.

22. Dispositif selon l'une des revendications 1 à 21, **caractérisé en ce que** l'optique de focalisation de la caméra est réglable entre près de l'infini et la surface de la vitre.

23. Dispositif selon l'une des revendications 1 à 22, **caractérisé par** un détecteur pour détecter des sauts de contraste dans le signal du détecteur pour détecter le mouillage/la salissure sur la surface de vitre.
